# EUROPÄISCHE PATENTSCHRIFT

(11) **EP 3 757 045 B1**
(45) Veröffentlichungstag und Bekanntmachung des Hinweises auf die Patenterteilung: **22.02.2023**
(21) Anmeldenummer: 19182181.8
(22) Anmeldetag: 25.06.2019
(51) Int. Cl.: B65G 47/96, B65G 65/00, B65G 47/34

(54) **ABWERFEN EINES STÜCKGUTES VON EINEM LASTAUFNAHMEMITTEL**
EJECTION OF A PIECE GOOD FROM A LOAD RECEIVING MEANS
PROJECTION UNE PIÈCE DE MARCHANDISE D'UN MOYEN RÉCEPTEUR DE CHARGE

(43) Veröffentlichungstag der Anmeldung: 30.12.2020
(73) Patentinhaber: Körber Supply Chain Logistics GmbH, 78467 Konstanz (DE)
(72) Erfinder: ENENKEL, Peter, 78462 Konstanz (DE)
(74) Vertreter: Müller Schupfner & Partner Patent- und Rechtsanwaltspartnerschaft mbB

(56) Entgegenhaltungen:
- EP-A1- 2 297 010
- EP-A2- 0 611 709
- EP-A2- 0 611 713
- DE-A1- 2 717 199
- DE-A1-102012 207 007
- US-A1- 2010 213 031

## Beschreibung

Abwerfen eines Stückgutes von einem Lastaufnahmemittel Sortiersysteme die auf der Verwendung von fahrerlosen Transportfahrzeugen (FTF) beruhen, werden heute auf der Basis bekannter FTF-Geometrien und Top-Loading Vorrichtungen aufgebaut. Stückgüter werden hierbei in Schalen, auf Bändern oder Rollen transportiert. Für die Sortieraufgabe von beispielsweise postalischem Stückgut ist eine geeignete Übergabe vom Transportsystem zum kumulierenden Endstellenbehältnis erforderlich. Diese erfolgt heute über Verwurf oder Rutschen (Gleiten). Hierbei ist in der Regel mindestens eine Bewegungskomponente über Reibung oder Stoß abzubauen, was zu unzureichenden Übergabeergebnissen führen kann. Fehlsortierungen, Verklemmungen, Liegenbleiben einer Sendung und Sendungsbeschädigung sind mögliche Folgen davon. Nur wenn das Fördermittel (hier FTF) steht, ist eine schonende Übergabe möglich. Dies wirkt sich aber unmittelbar auf den Durchsatz aus. Der Abwurf aus einem fahrenden Fahrzeug ist daher immer anzustreben.

WO 2010/003392 A1 offenbart eine Fördervorrichtung mit einer Anzahl von entlang einer Führungseinrichtung bewegbaren Transporteinheiten, an deren Oberseite zur schonenden Aufund/oder Abgabe von Stückgutteilen jeweils eine entgegen einer Verfahrrichtung der Transporteinheiten antreibbare Abschiebeeinrichtung angeordnet ist. WO 2010/003392 A1 offenbart die Merkmale der Oberbegriffe der Ansprüche 1 und 7.

Bisherige Lösungen mit einem Abwurf aus einem FTF basieren einerseits darauf, dass Stückgüter von dem FTF im Stillstand übergeben werden. Solche Systeme sind bekannt von Hikvision (https://www.youtube.com/watch?v=qt8ux1EYQU4), Tompkin Robotics (https://www.youtube.com/watch?v=EbLDXsEPHS8) und Geekplusrobotics (https://www.youtube.com/watch?v=hmSp39KbM6A).

Andererseits basieren bisherige Lösungen darauf, dass Stückgüter während der Fahrt seitwärts, beispielsweise mittels eines Crossbelts oder einer Kippschale übergeben werden, beispielsweise auf eine Rutsche oder Rollenbahn mit einer Bewegungskomponente in Fahrtrichtung des FTF.

Der vorliegenden Erfindung liegt die Aufgabe zugrunde, Stückgüter effizient und schonend aus Lastaufnahmemitteln abzuwerfen.

Diese Aufgabe wird gelöst durch ein Verfahren zum Abwerfen eines Stückgutes von einem Lastaufnahmemittel, sowie durch eine Anwendung des Verfahrens in einer Sortiervorrichtung für Stückgüter, sowie durch ein System zum Abwerfen eines Stückguts von einem Lastaufnahmemittel mit den Merkmalen des jeweiligen unabhängigen Anspruchs.

Gemäss dem Verfahren zum Abwerfen eines Stückgutes von einem Lastaufnahmemittel wird eine Transportfahrt eines Stückgutes auf dem Lastaufnahmemittel durch Bewegen des Lastaufnahmemittels durchgeführt. Das Stückgut wird mittels einer auf dem Lastaufnahmemittel angeordneten oder von dem Lastaufnahmemittel umfassten Abwurfvorrichtung abgeworfen, welche das Stückgut während der Transportfahrt in einer Abwurfrichtung mit einer vektoriellen Komponente entgegen der momentanen Fahrtrichtung des Lastaufnahmemittels beschleunigt.

Das System zum Abwerfen eines Stückguts von einem Lastaufnahmemittel umfasst ein Lastaufnahmemittel, eine Antriebsvorrichtung und eine Abwurfvorrichtung. Das Lastaufnahmemittel ist ausgestaltet das Stückgut aufzunehmen. Die Antriebsvorrichtung ist ausgestaltet das Lastaufnahmemittel zum Durchführen einer Transportfahrt zu bewegen. Die Abwurfvorrichtung ist mit dem Lastaufnahmemittel mechanisch verbunden oder von diesem umfasst, sodass es mit diesem mitfährt. Die Abwurfvorrichtung ist ausgestaltet, das Stückgut während der Transportfahrt von dem sich bewegenden Lastaufnahmemittel abzuwerfen und dabei das Stückgut in einer Abwurfrichtung mit einer vektoriellen Komponente entgegen der momentanen Fahrtrichtung des Lastaufnahmemittels zu beschleunigen.

In den Unteransprüchen sind weitere vorteilhafte Maßnahmen aufgelistet, die beliebig miteinander kombiniert und sowohl auf das Verfahren, die Verwendung des Verfahrens und das System angewendet werden können, um weitere Vorteile zu erzielen.

Die Abwurfrichtung wird mathematisch in der Regel durch einen Vektor mit kartesischen Vektorkomponenten beschrieben. Gemäss einem Ausführungsbeispiel ist die Abwurfrichtung genau entgegen der momentanen Fahrtrichtung ausgerichtet. Damit ist gemeint, dass die Abwurfrichtung (natürlich abgesehen von Ungenauigkeiten) keine zu der momentanen Fahrtrichtung orthogonal angeordneten Vektorkomponenten aufweist. Dadurch ergibt sich ein besonders effizienter und schonender Abwurf, da zum Auffangen oder Aufnehmen des Stückgutes keine durch den Abwurf bedingten Geschwindigkeitskomponenten transversal zur Fahrtrichtung abgebaut werden müssen. Die Abwurfrichtung muss jedoch nicht genau entgegen der momentanen Fahrtrichtung ausgerichtet sein, sondern kann gemäss anderen Ausführungsbeispielen zusätzlich zu der Vektorkomponente entgegen der Fahrtrichtung auch eine oder zwei Vektor-komponenten umfassen, die orthogonal zur Fahrtrichtung angeordnet sind.

Gemäss einem Ausführungsbeispiel entspricht die Geschwindigkeitskomponente der vom Lastaufnahmemittel aus gesehenen Abwurfgeschwindigkeit entgegen der Fahrtrichtung dem Betrag der momentanen Fahrgeschwindigkeit des Lastaufnahmemittels. Dadurch ergibt sich ein besonders effizienter und schonender Abwurf, da zum Auffangen oder Aufnehmen des Stückgutes keine durch den Abwurf bedingten Geschwindigkeitskomponente in Fahrtrichtung abgebaut werden muss.

Gemäss einem Ausführungsbeispiel wirft die Abwurfvorrichtung das Stückgut von dem Lastaufnahmemittel mit einer vom Lastaufnahmemittel aus gesehenen Abwurfgeschwindigkeit ab, die dem Gegenvektor der momentanen Geschwindigkeit des Lastaufnahmemittels entspricht. Dadurch beträgt die resultierende Abwurfgeschwindigkeit null. Dadurch ergibt sich ein besonders effizienter und schonender Abwurf.

Gemäss einem Ausführungsbeispiel wird die Transportfahrt für das Lastaufnahmemittel individuell, also beispielsweise nicht mit aneinander gekoppelten Lastaufnahmemitteln, durchgeführt. Beispielsweise wird für eine Pluralität von Lastaufnahmemitteln für jedes Lastaufnahmemittel eine individuelle Transportfahrt, also jeweils ein individuell bestimmter Pfad, durchgeführt. Die Antriebsvorrichtung ist ausgestaltet das Lastaufnahmemittel individuell zum Durchführen einer Transportfahrt zu bewegen. Beispielsweise kann eine individuelle Transportfahrt für als FTF ausgestaltete oder von FTF umfasste Lastaufnahmemittel durchgeführt werden.

Vorzugsweise wird das Stückgut zwischen den Fahrwerksrädern des FTF abgeworfen.

Erfindungsgemäß wird das Stückgut von dem Lastaufnahmemittel in ein weiteres Lastaufnahmemittel abgeworfen, das sich zum Zeitpunkt des Abwurfs unterhalb des Lastaufnahmemittels befindet.

Das weitere Lastaufnahmemittel kann beispielsweise eine Endstelle in einem Sortiersystem sein, welche Stückgüter mit zumindest gleicher Destination oder gleicher Zwischendestination sammelt.

Das weitere Lastaufnahmemittel kann jedoch auch ausgestaltet sein, das Stückgut auf eine weitere tiefergelegene Ebene abzuwerfen, beispielsweise im Rahmen eines Sortierprozesses über mehr als zwei Sortierebenen. Das weitere Lastaufnahmemittel kann dann gemäss einem Ausführungsbeispiel der beschriebenen Lastaufnahmemittel ausgestaltet, welche das Stückgut mittels einer auf dem Lastaufnahmemittel angeordneten Abwurfvorrichtung, welche das Stückgut während der Transportfahrt in einer Abwurfrichtung mit einer Komponente entgegen der momentanen Fahrtrichtung des weiteren Lastaufnahmemittels beschleunigt und abwirft.

Gemäss einem Ausführungsbeispiel umfasst die Abwurfvorrichtung mindestens einen Riemen, ein Band, eine Rolle, einen Schieber oder eine Rutsche um das Stückgut gezielt entgegen der Fahrtrichtung zu beschleunigen. Vorzugsweise ist der mindestens eine Riemen, das mindestens eine Band, die mindestens eine Rolle, der mindestens eine Schieber antreibbar.

Gemäss einem Ausführungsbeispiel ist das Lastaufnahmemittel als Tieflader ausgestaltet. Dadurch lässt sich die resultierende Abwurfgeschwindigkeit des Stückguts aufgrund einer geringen Fallhöhe reduzieren.

Gemäss einem Ausführungsbeispiel nimmt für das Verfahren zum Abwerfen eines Stückguts das Lastaufnahmemittel für die Transportfahrt genau ein Stückgut auf. Gemäss einem Ausführungsbeispiel ist das System zum Abwerfen eines Stückguts eingerichtet, für eine Transportfahrt genau ein Stückgut in oder auf das Lastaufnahmemittel aufzunehmen.

Erfindungsgemäß ist das System zum Abwerfen eines Stückguts ein fahrerloses Transportfahrzeug.

Gemäss einem Ausführungsbeispiel ist das System zum Abwerfen eines Stückguts eine Sortiervorrichtung.

Erfindungsgemäß umfasst das System ein weiteres Lastaufnahmemittel und ist ausgestaltet, das Stückgut in das weitere Lastaufnahmemittel abzuwerfen, wenn sich zum Zeitpunkt des Abwurfs das weitere Lastaufnahmemittel unterhalb des Lastaufnahmemittels befindet.

Im Folgenden wird die Erfindung anhand der in den Figuren dargestellten Ausführungsbeispiele näher beschrieben und erläutert. Dabei zeigt:
Figur 1 eine schematische Seitenansicht in Fahrtrichtung eines als fahrerloses Transportfahrzeug ausgestalteten Systems zum Abwerfen eines Stückgutes gemäss einem Ausführungsbeispiel der Erfindung;
Figur 2 eine um 90° gedrehte schematische Seitenansicht des Systems von Figur 1;
Figur 3 eine Draufsicht auf eine Abwurfebene ohne Antriebsvorrichtung mit Abwurfstellen, durch welche Stückgüter abgeworfen werden können;
Figur 4 eine schematische Seitenansicht in Fahrtrichtung eines Systems zum Abwerfen eines Stückgutes gemäss einem weiteren Ausführungsbeispiel welches nicht Teil der vorliegenden Erfindung ist.
Figur 5 eine um 90° gedrehte schematische Seitenansicht des Systems von Figur 4;
Figur 6 eine Draufsicht auf eine Abwurfebene mit einer Antriebsvorrichtung und Abwurfstellen durch welche Stückgüter abgeworfen werden können;
Figuren 7-9 schematische Seitenansichten eines Systems zum Abwerfen eines Stückguts zu verschiedenen Zeitpunkten zur Illustration eines Verfahrens zum Abwerfen eines Stückguts von dem Lastaufnahmemittel gemäss einem Ausführungsbeispiel der Erfindung.
Figuren 10-13 schematische perspektivische Ansichten eines Systems zum Abwerfen eines Stückguts zu verschiedenen Zeitpunkten zur Illustration eines Verfahrens zum Abwerfen eines Stückguts von dem Lastaufnahmemittel gemäss einem Ausführungsbeispiel der Erfindung.

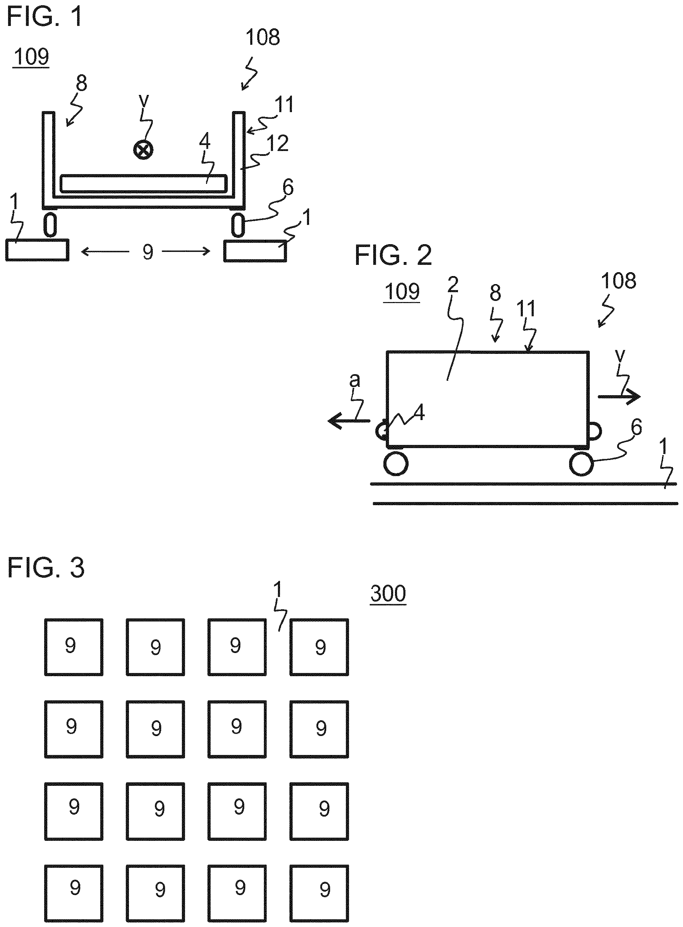

Die Figuren 1 und 2 zeigen unterschiedliche schematische Seitenansichten eines als fahrerloses Transportfahrzeug ausgestalteten Systems 108 zum Abwerfen eines Stückgutes 7 von einem Lastaufnahmemittel 8 gemäss einem Ausführungsbeispiel der Erfindung. Figur 1 zeigt das FTF in Fahrtrichtung v, während Figur 2 eine Ansicht orthogonal zur Fahrtrichtung ist.

Das System 108 umfasst ein Lastaufnahmemittel 8 und eine elektrische Antriebsvorrichtung 6. Das Lastaufnahmemittel 8 umfasst einen Rahmen 11 sowie eine auf dem Rahmen montierte Abwurfvorrichtung 4. Die Abwurfvorrichtung 4 umfasst einen elektrisch angetriebenen Gurtförderer, bei dem ein Band nach bekannter Art um zwei Rollen umlaufend angeordnet ist. Der Gurtförderer 4 ist ausgestaltet, das Stückgut 7 aufzunehmen und von dem Lastaufnahmemittel 8 abzuwerfen. Die Antriebsvorrichtung 6 ist auf der Unterseite des Lastaufnahmemittels 8 montiert, umfasst elektrisch angetriebene Räder und ist ausgestaltet, das Lastaufnahmemittel 8 zum Durchführen einer Transportfahrt auf einer Oberfläche, beispielsweise einer Fahrbahn, zu bewegen.

Das System 108 ist als Tieflader ausgestaltet. Damit ist gemeint, dass die Höhe von der aus das Stückgut 7 abgeworfen wird tief gelegt ist. Der Rahmen 11 umfasst zudem Seitenwände 12, welche in Fahrtrichtung gesehen lateral auf beiden Seiten des Lastaufnahmemittels angeordnet sind, um ein Hinunterfallen des Stückgutes von dem Lastaufnahmemittel in einer Richtung quer zur Fahrtrichtung v zu verhindern.

Der elektrisch angetriebene Gurtförderer ist ausgestaltet und angeordnet, das Stückgut 7 während der Transportfahrt von dem sich bewegenden Lastaufnahmemittel 8 abzuwerfen und dabei das Stückgut 7 in einer Abwurfrichtung a entgegen der momentanen Fahrtrichtung v des Lastaufnahmemittels 8 zu beschleunigen um die resultierende Abwurfgeschwindigkeit des Stückguts 7 zu reduzieren. Vorzugsweise ist die Abwurfvorrichtung eingerichtet, das Stückgut 7 auf eine vom Lastaufnahmemittel aus wahrgenommene Abwurfgeschwindigkeit va entgegen der Fahrtrichtung zu beschleunigen, deren Betrag dem Betrag der momentanen Fahrgeschwindigkeit v des Lastaufnahmemittels entspricht.

Dadurch lässt sich eine resultierende Abwurfgeschwindigkeit ohne horizontale Geschwindigkeitskomponenten erreichen.

In einer weiteren Ausführungsform umfasst das System zum Abwerfen eines Stückguts von einem Lastaufnahmemittel nicht nur das fahrerlose Transportfahrzeug 108, sondern auch eine Oberflächenstruktur 1, beispielsweise einem Fahrbahnsystem, auf welcher sich das fahrerlose Transportfahrzeug 108 fortbewegen kann. Verweisend auf Figur 3 umfasst die Oberflächenstruktur 1 Abwurfstellen 9. Das FTF 108 ist ausgestaltet, auf der Oberflächenstruktur 1 über die Abwurfstellen hinwegzufahren und dabei ein Stückgut durch eine beliebige der Abwurfstellen 9 hindurch abzuwerfen. Ein solches um mindestens eine Oberflächenstruktur erweitertes System wird zum besseren Verständnis im Folgenden mit dem Bezugszeichen 109 referenziert. Das System 109 lässt sich insbesondere als Sortiersystem zum Sortieren von Stückgütern ausführen.

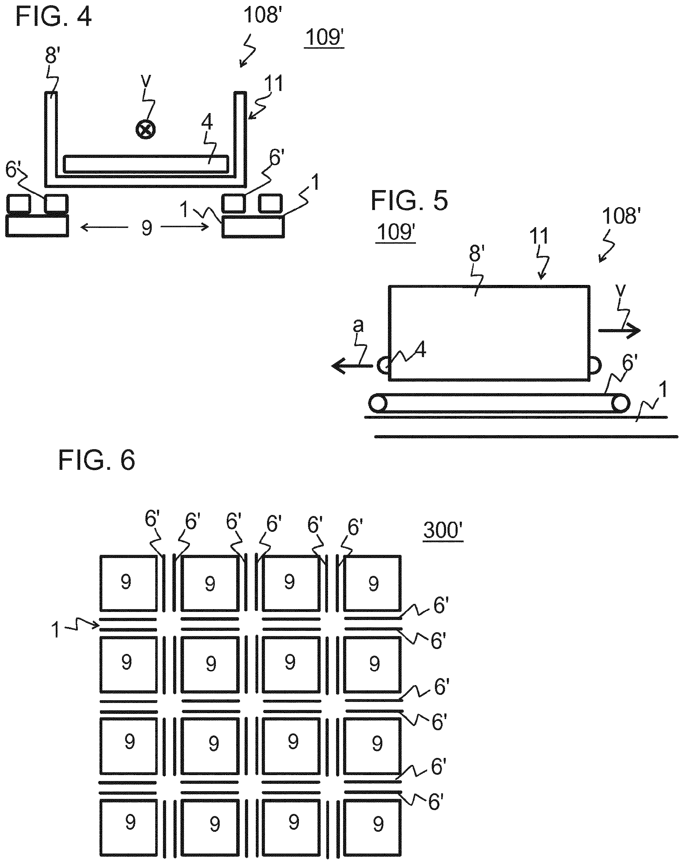

Die Figuren 4 bis 6 offenbaren Systeme 108', 109" zum Abwerfen eines Stückgutes gemäss weiteren Ausführungsbeispielen welche nicht Teil der vorliegenden Erfindung sind. Die Figur 4 ist eine Seitenansicht in Fahrtrichtung und die Figur 5 eine zur Fahrtrichtung orthogonale Seitenansicht. Die Systeme 108', 109" sind oder umfassen im Unterschied zu den Systemen 108, 109 nicht FTF mit einer eignen Antriebsvorrichtung, sondern können fest auf eine Fahroberfläche montiert werden. Beispielsweise kann die Antriebsvorrichtung in Form von Bandförderern 6' auf der Oberflächenstruktur 1 jeweils paarweise auf beiden Seiten einer Abwurfstelle 9 montiert werden, wie in Figur 6 dargestellt. Auf diese Weise lässt sich ein Lastaufnahmemittel 11 mit einer Abwurfvorrichtung 4 direkt aufliegend auf den Bandförderern 6' über eine Abwurfstelle 9 hinwegfahren, und ein auf der Abwurfvorrichtung 4 aufliegendes Stückgut 7 kann während einer Transportfahrt entgegen der momentanen Fahrtrichtung beschleunigt und vom Lastaufnahmemittel 8 durch die Abwurfstelle 9 hindurch abgeworfen werden.

Wie bei den anhand der Figuren 1-3 dargestellten Ausführungsbeispielen lässt sich auch bei den anhand von Figuren 4-6 dargestellten Ausführungsbeispielen die Transportfahrt für das Lastaufnahmemittel 8 individuell durchführen. Gegenüber Ausführungsbeispielen bei welchen beispielsweise eine zugartig aneinander gekettete Komposition von Lastaufnahmitteln gekoppelt sind, ermöglicht eine individuell durchführbare Transportfahrt eine höhere Flexibilität.

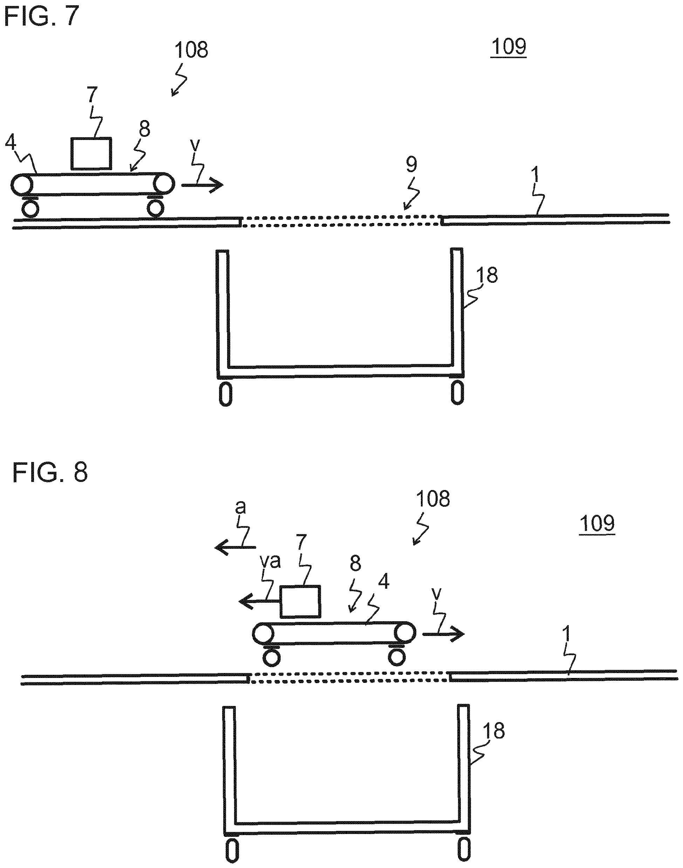

Figuren 7-9 illustrieren ein Verfahren zum Abwerfen eines Stückguts 7 von dem Lastaufnahmemittel 8 gemäss einem Ausführungsbeispiel der Erfindung. Das Lastaufnahmemittel 8 ist Teil eines FTF 108, so wie anhand der Ausführungsbeispiele der Figuren 1-3 illustriert. Unter der Abwurfstelle 9 ist ein weiteres Lastaufnahmemittel 18, beispielsweise eine Endstelle oder ein weiteres FTF, platziert.

Das System 109, umfasst das FTF 108, ein weiteres Lastaufnahmemittel 18 und die Abwurfebene 1. Das System 109 ist in diesem Ausführungsbeispiel eine Sortieranlage und ist ausgestaltet, das Stückgut in das weitere Lastaufnahmemittel 18 abzuwerfen, wenn sich zum Zeitpunkt des Abwurfs das weitere Lastaufnahmemittel 18 unterhalb des Lastaufnahmemittels 8 befindet.

Das weitere FTF könnte gleich gebaut sein wie das FTF 108 und das Stückgut 7 wiederum auf eine gleiche die resultierende Abwurfgeschwindigkeit reduzierende Weise auf eine noch tiefer gelegene Auffangebene abwerfen.

Figur 7 zeigt wie das mit genau einem Stückgut 7 beladene einzelne Lastaufnahmemittel 8 eine Transportfahrt durchführt, dabei mit einer Geschwindigkeit v auf eine Abwurfstelle 9 zufährt, zu einem Zeitpunkt, zu welchem es sich noch vor der Abwurfstelle 9 befindet.

Figur 8 zeigt das System 109 zu einem Zeitpunkt, zu welchem das Lastaufnahmemittel über die Abwurfstelle 9 drüberfährt.

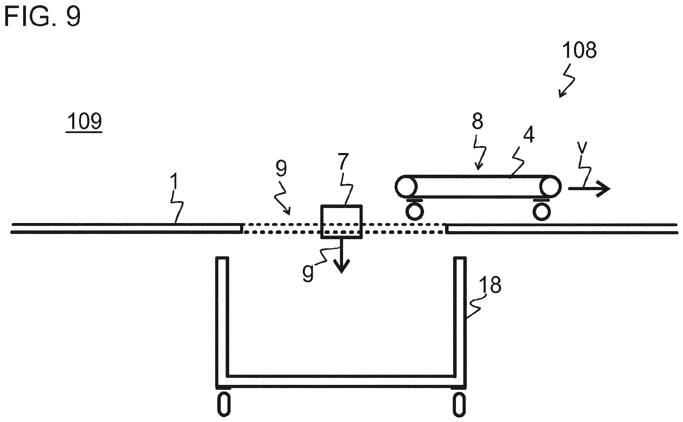

Die Abwurfvorrichtung wirft das Stückgut 7 mittels der auf dem Lastaufnahmemittel 8 angeordneten Abwurfvorrichtung 4, welche die resultierende Abwurfgeschwindigkeit des Stückguts 7 reduziert, indem sie das Stückgut 7 während der Transportfahrt in einer Abwurfrichtung a mit einer vektoriellen Komponente entgegen der momentanen Fahrtrichtung v des Lastaufnahmemittels 8 beschleunigt, zwischen den seitlichen Fahrwerkrädern des FTF ab. Die Abwurfvorrichtung 4 beschleunigt dabei das Stückgut auf eine von dem Lastaufnahmemittel gesehenene Abwurfgeschwindigkeit va, die dem Gegenvektor der momentanen Geschwindigkeit v des Lastaufnahmemittels 8 entspricht. Dadurch ergibt sich eine von dem ruhenden Oberfläche 1 aus wahrgenommene resultierende Abwurfgeschwindigkeit die keine Geschwindigkeitsanteile in horizontaler Richtung aufweist. Um dies zu illustrieren zeigt Figur 9 das System 109 zu einem Zeitpunkt kurz nach dem Abwurf des Stückguts 7. Lediglich die Erdbeschleunigung g wirkt auf das Stückgut, und das Stückgut fällt daher senkrecht in das weitere Lastaufnahmemittel 18, während das FTF 108 weiterfährt.

In dem in den Figuren 7-9 ausgestalteten Ausführungsbeispiel ist die Abwurfvorrichtung als Gurtförderer ausgestaltet, der auf dem FTF so montiert ist, dass er das Stückgut entgegen der Fahrtrichtung beschleunigen kann. Andere Ausführungsbeispiele können auch eine antreibbare Rollenbahn oder einen automatischen Schieber verwenden.

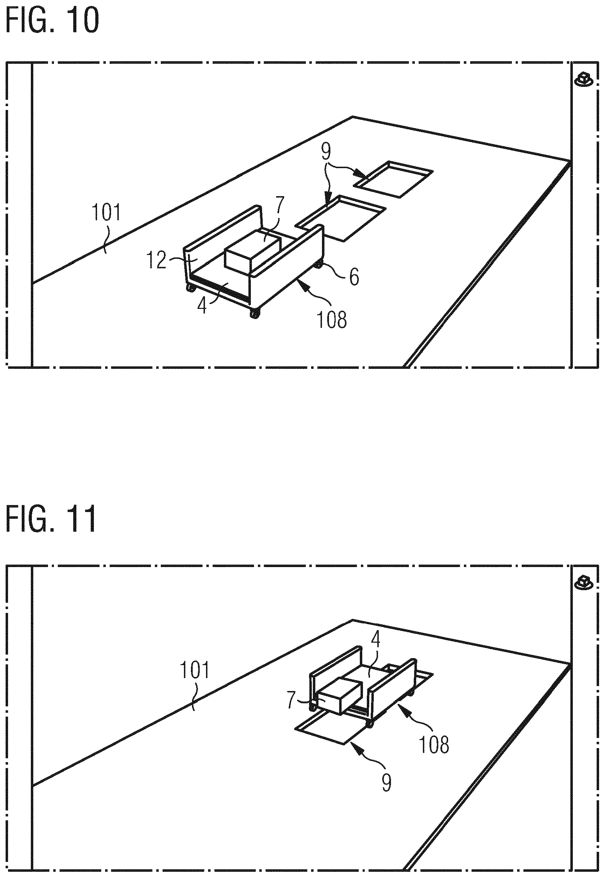

Figuren 10-13 illustrieren in zeitlicher Abfolge ein System zum Abwerfen eines Stückguts sowie ein Verfahrens zum Abwerfen des Stückguts von einem Lastaufnahmemittel gemäss einem Ausführungsbeispiel der Erfindung. Die Figuren 10-13 zeigen auch ein Sortiersystem, das ein, vorzugsweise mehrere FTF und mindestens eine, vorzugsweise mehrere Abwurfstellen 9 umfasst.

Figur 10 zeigt wie das mit einem Stückgut 7 beladenen FTF 9 auf eine Abwurfstelle 9 zufährt. Das Stückgut liegt auf einem auf dem FTF bodennah montierten Fördergurt 4 auf, der als Abwurfvorrichtung ausgestaltet ist und der der entgegen der Fahrtrichtung antreibbar ist. Mit andern Worten: Der Fördergurt 4 ist ausgestaltet das Stückgut 7 entgegen der momentanen Fahrtrichtung zu beschleunigen und das Stückgut mit einer die momentane Fahrgeschwindigkeit kompensierenden lokalen Abwurfgeschwindigkeit von dem FTF 108 abzuwerfen.

Figur 11 zeigt das FTF 108 während der Fahrt zu einem Zeitpunkt zu welchem es über eine der Abwurfstellen 9 gefahren ist und das Stückgut durch den Fördergurt 4 auf eine der momentanen Fahrgeschwindigkeit genau entgegengesetzten lokalen Abwurfgeschwindigkeit beschleunigt hat, sodass das Stückgut 7 von der ruhenden Abwurfebene 108 aus gesehen ohne horizontale Geschwindigkeitskomponenten von dem FTF 108 abgeworfen wird.

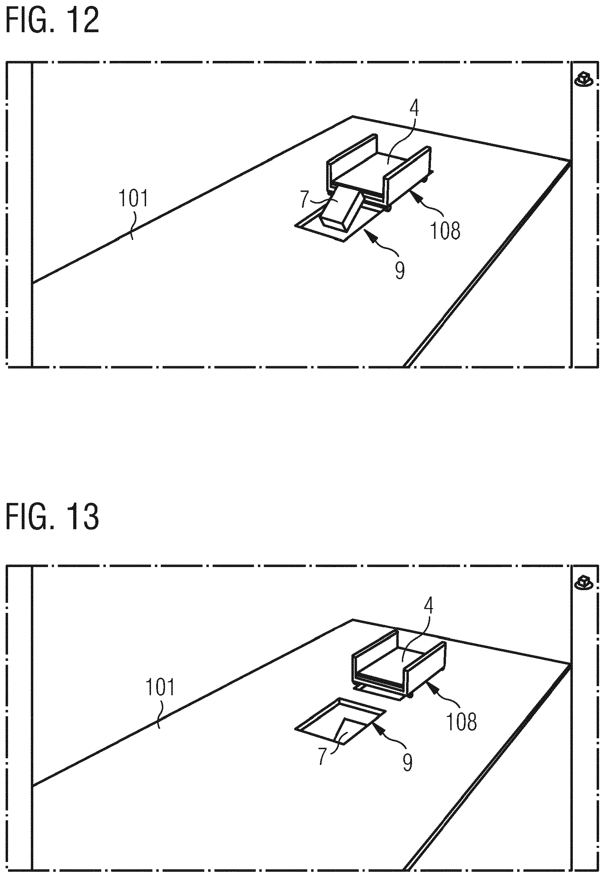

Figur 12 zeigt wie das Stückgut unmittelbar nach dem Abwurf im freien Fall ohne horizontale Geschwindigkeitskomponenten durch die Abwurfstelle 9 fällt. Figur 13 zeigt wie das FTF 108 bereits weiter gefahren ist und das Stückgut 7 weiter durch die Abwurfstelle 9 hindurch gefallen ist, beispielsweise in eine Endstelle die unter der Abwurfstelle 9 angeordnet ist.

Während des gesamten in den Figuren 10-13 dargestellten Abwurfvorgangs kann das FTF 108 ohne anhalten und ohne seine Geschwindigkeit an den Abwurfvorgang anpassen zu müssen über die Abwurfebene manövrieren.

Bevorzugte Ausführungsformen der Erfindung basieren auf folgenden Merkmalen
- den Transport des Stückgutes möglichst nah am Fahrbahnboden (Tieflader FTF) ;
- eine die Fördergeschwindigkeit kompensierende und das Gut entgegen der Förderrichtung beschleunigende und fördernde Vorrichtung auf einem FTF;
- passive Rutsche;
- aktive Riemen, Band, Rollen, Schieber;
- Endstellen, die sich beim Abwurf unterhalb des FTF befinden;
- Endstellen, die sich unterhalb der FTF zwischen den Fahrwerksrädern des FTF befinden und somit überfahren werden können;

Daraus können sich folgende Vorteile ergeben:
- Kein Durchsatzverlust durch stoppende FTF;
- Das Stückgut hat nur eine Bewegungskomponente (Gutschonung) ;
- Das Stückgut lässt sich sehr gut in ein Gebinde verwerfen und kumulieren (senkrechter Fall).

## Patentansprüche

1. Verfahren zum Abwerfen eines Stückgutes (7) von einem Lastaufnahmemittel (8), umfassend die Verfahrensschritte:
- Durchführen einer Transportfahrt des Stückguts (7) auf dem Lastaufnahmemittel (8) durch Bewegen des Lastaufnahmemittels (8);
- Abwerfen des Stückguts (7) mittels einer auf dem Lastaufnahmemittel (8) angeordneten oder von diesem umfassten Abwurfvorrichtung (4), welche das Stückgut (7) während der Transportfahrt in einer Abwurfrichtung (a) mit einer vektoriellen Komponente entgegen der momentanen Fahrtrichtung (v) des Lastaufnahmemittels (8) beschleunigt; wobei das Stückgut (7) von dem Lastaufnahmemittel (8) in ein weiteres Lastaufnahmemittel (18) abgeworfen wird, das sich zum Zeitpunkt des Abwurfs unterhalb des Lastaufnahmemittels (8) befindet,
**dadurch gekennzeichnet, dass** das Lastaufnahmemittel (8) ein fahrerloses Transportfahrzeug ist.

2. Verfahren nach Anspruch 1, wobei die Transportfahrt für das Lastaufnahmemittel (8) individuell durchgeführt wird.

3. Verfahren nach einem der vorhergehenden Ansprüche, wobei die Abwurfrichtung (a) genau entgegen der momentanen Fahrtrichtung ist und/oder der Betrag der Geschwindigkeitskomponente der vom Lastaufnahmemittel (8) aus gesehenen Abwurfgeschwindigkeit (va) entgegen der Fahrtrichtung dem Betrag der momentanen Fahrgeschwindigkeit (v) des Lastaufnahmemittels entspricht und/oder die Abwurfvorrichtung (4) das Stückgut von dem Lastaufnahmemittel mit einer vom Lastaufnahmemittel aus gesehenen Abwurfgeschwindigkeit (va) abwirft, die dem Gegenvektor der momentanen Geschwindigkeit (v) des Lastaufnahmemittels (8) entspricht.

4. Verfahren nach einem der vorhergehenden Ansprüche, wobei die Abwurfvorrichtung (4) mindestens einen Riemen, ein Band, eine Rolle, einen Schieber oder eine Rutsche umfasst, mittels welchen das Stückgut abgeworfen wird.

5. Verfahren nach einem der vorhergehenden Ansprüche, wobei das Lastaufnahmemittel (8) als Tieflader ausgestaltet ist.

6. Anwendung des Verfahrens nach einem der vorhergehenden Ansprüche in einer Sortiervorrichtung für Stückgüter.

7. System (108, 108', 109) zum Abwerfen eines Stückguts (7) von einem Lastaufnahmemittel (8), umfassend:
- das Lastaufnahmemittel (8), ausgestaltet das Stückgut aufzunehmen;
- eine Antriebsvorrichtung (6), ausgestaltet das Lastaufnahmemittel (8) zum Durchführen einer Transportfahrt zu bewegen;
- eine mit dem Lastaufnahmemittel (8) mechanisch verbundene oder von diesem umfasste Abwurfvorrichtung (4), die ausgestaltet ist, das Stückgut (7) während der Transportfahrt von dem sich bewegenden Lastaufnahmemittel (8) abzuwerfen und dabei das Stückgut (7) in einer Abwurfrichtung (a) mit einer vektoriellen Komponente entgegen der momentanen Fahrtrichtung (v) des Lastaufnahmemittels (8) zu beschleunigen;
wobei das System (108, 108', 109) ein weiteres Lastaufnahmemittel (18) aufweist, wobei das System (108) ausgestaltet ist, das Stückgut in das weitere Lastaufnahmemittel (18) abzuwerfen, wenn sich zum Zeitpunkt des Abwurfs das weitere Lastaufnahmemittel (18) unterhalb des Lastaufnahmemittels (8) befindet;
**dadurch gekennzeichnet, dass** das Lastaufnahmemittel (8) ein fahrerloses Transportfahrzeug ist.

8. System (108, 108', 109) nach Anspruch 7, wobei das System (108) ausgestaltet ist, die Transportfahrt für das Lastaufnahmemittel (8) individuell durchzuführen.

9. System (108, 108', 109) nach Anspruch 7 oder 8, wobei die Abwurfrichtung (a) genau entgegen der momentanen Fahrtrichtung ist und/oder der Betrag der Geschwindigkeitskomponente der vom Lastaufnahmemittel (8) aus gesehenen Abwurfgeschwindigkeit (va) entgegen der Fahrtrichtung dem Betrag der momentanen Fahrgeschwindigkeit (v) des Lastaufnahmemittels entspricht und/oder die Abwurfvorrichtung (4) das Stückgut von dem Lastaufnahmemittel mit einer vom Lastaufnahmemittel aus gesehenen Abwurfgeschwindigkeit (va) abwirft, die dem Gegenvektor der momentanen Geschwindigkeit (v) des Lastaufnahmemittels (8) entspricht.

10. System (108, 108', 109) nach einem der Ansprüche 7 bis 9, wobei die Abwurfvorrichtung (4) mindestens einen Riemen, ein Band, eine Rolle, einen Schieber oder eine Rutsche umfasst.

11. System (108, 108', 109) nach einem der Ansprüche 7 bis 10, wobei das Lastaufnahmemittel (8) als Tieflader ausgestaltet ist.

## Claims

1. Method for ejecting a piece good (7) from a load-receiving means (8), comprising the following method steps:
- implementing a transport travel of the piece good (7) on the load-receiving means (8) by moving the load-receiving means (8);
- ejecting the piece good (7) by means of an ejection device (4) which is arranged or included on the load-receiving means (8) and which accelerates the piece good (7) during the transport travel in an ejection direction (a) with a vectorial component counter to the instantaneous direction of travel (v) of the load-receiving means (8); wherein the piece good (7) is ejected from the load-receiving means (8) into a further load-receiving means (18) which, at the time of ejection, is situated below the load-receiving means (8), **characterized in that** the load-receiving means (8) is a driverless transport vehicle.

2. Method according to Claim 1, wherein the transport travel for the load-receiving means (8) is individually implemented.

3. Method according to either of the preceding claims, wherein the ejection direction (a) is exactly counter to the instantaneous direction of travel and/or the value of the speed component of the ejection speed (va), as seen from the load-receiving means (8), counter to the direction of travel corresponds to the value of the instantaneous travelling speed (v) of the load-receiving means and/or the ejection device (4) ejects the piece good from the load-receiving means at an ejection speed (va), as seen from the load-receiving means, which corresponds to the counter-vector of the instantaneous speed (v) of the load-receiving means (8) .

4. Method according to one of the preceding claims, wherein the ejection device (4) comprises at least one belt, one band, one roller, one pusher or one chute by means of which the piece good is ejected.

5. Method according to one of the preceding claims, wherein the load-receiving means (8) is configured as a low loader.

6. Use of the method according to one of the preceding claims in a sorting apparatus for piece goods.

7. System (108, 108', 109) for ejecting a piece good (7) for a load-receiving means (8), comprising:
- the load-receiving means (8), configured to receive the piece good;
- a drive device (6), configured to move the load-receiving means (8) to implement a transport travel;
- an ejection device (4) which is mechanically connected to or included by the load-receiving means (8) and which is configured to eject the piece good (7) during the transport travel from the moving load-receiving means (8) and thereby to accelerate the piece good (7) in an ejection direction (a) with a vectorial component counter to the instantaneous direction of travel (v) of the load-receiving means (8) ;
wherein the system (108, 108', 109) has a further load-receiving means (18),
wherein the system (108) is configured to eject the piece good into the further load-receiving means (18) when, at the time of ejection, the further load-receiving means (18) is situated below the load-receiving means (8);
**characterized in that** the load-receiving means (8) is a driverless transport vehicle.

8. System (108, 108', 109) according to Claim 7, wherein the system (108) is configured to individually implement the transport travel for the load-receiving means (8).

9. System (108, 108', 109) according to Claim 7 or 8, wherein the ejection direction (a) is exactly counter to the instantaneous direction of travel and/or the value of the speed component of the ejection speed (va), as seen from the load-receiving means (8), counter to the direction of travel corresponds to the value of the instantaneous travel speed (v) of the load-receiving means and/or the ejection device (4) ejects the piece good from the load-receiving means at an ejection speed (va), as seen from the load-receiving means, which corresponds to the counter-vector of the instantaneous speed (v) of the load-receiving means (8) .

10. System (108, 108', 109) according to one of Claims 7 to 9, wherein the ejection device (4) comprises at least one belt, one band, one roller, one pusher or one chute.

11. System (108, 108', 109) according to one of Claims 7 to 10, wherein the load-receiving means (8) is configured as a low loader.

## Revendications

1. Procédé pour éjecter une marchandise de détail (7) depuis un moyen récepteur de charge (8), comprenant les étapes consistant à :
- effectuer un déplacement de transport de la marchandise de détail (7) sur le moyen récepteur de charge (8) par mouvement du moyen récepteur de charge (8) ;
- éjecter la marchandise de détail (7) au moyen d'un dispositif d'éjection (4) disposé sur le moyen récepteur de charge (8) ou entouré par celui-ci, qui accélère la marchandise de détail (7) pendant le déplacement transport dans une direction d'éjection (a) avec une composante vectorielle dans le sens opposé à la direction de déplacement momentanée (v) du moyen récepteur de charge (8) ;
la marchandise de détail (7) étant éjectée depuis le moyen récepteur de charge (8) jusque dans un autre moyen récepteur de charge (18) qui se trouve en dessous du moyen récepteur de charge (8) au moment de l'éjection,
**caractérisé en ce que** le moyen récepteur de charge (8) est un véhicule de transport sans conducteur.

2. Procédé selon la revendication 1,
dans lequel le déplacement de transport pour le moyen récepteur de charge (8) est effectué individuellement.

3. Procédé selon l'une des revendications précédentes,
dans lequel la direction d'éjection (a) est exactement opposée à la direction de déplacement momentanée, et/ou la valeur de la composante de vitesse de la vitesse d'éjection (va), vue depuis le moyen récepteur de charge (8), dans le sens opposé à la direction de déplacement correspond à la valeur de la vitesse de déplacement momentanée (v) du moyen récepteur de charge, et/ou le dispositif d'éjection (4) éjecte la marchandise de détail depuis le moyen récepteur de charge à une vitesse d'éjection (va), vue depuis le moyen récepteur de charge, qui correspond au vecteur opposé de la vitesse momentanée (v) du moyen récepteur de charge (8).

4. Procédé selon l'une des revendications précédentes,
dans lequel le dispositif d'éjection (4) comprend au moins une courroie, une bande, un rouleau, un poussoir ou une goulotte, permettant d'éjecter la marchandise de détail.

5. Procédé selon l'une des revendications précédentes,
dans lequel le moyen récepteur de charge (8) est conçu comme une remorque surbaissée.

6. Application du procédé selon l'une des revendications précédentes dans un dispositif de tri pour marchandises de détail.

7. Système (108, 108', 109) pour éjecter une marchandise de détail (7) depuis un moyen récepteur de charge (8), comprenant :
- le moyen récepteur de charge (8), conçu pour recevoir la marchandise de détail ;
- un dispositif d'entraînement (6), conçu pour déplacer le moyen récepteur de charge (8) pour effectuer un déplacement de transport ;
- un dispositif d'éjection (4) relié mécaniquement au moyen récepteur de charge (8) ou entouré par celui-ci, qui est conçu pour éjecter la marchandise de détail (7) pendant le déplacement de transport depuis le moyen récepteur de charge (8) en mouvement et pour accélérer la marchandise de détail (7) dans une direction d'éjection (a) avec une composante vectorielle en sens opposé à la direction de déplacement momentanée (v) du moyen récepteur de charge (8) ;
le système (108, 108', 109) comprenant un autre moyen récepteur de charge (18),
le système (108) étant conçu pour éjecter la marchandise de détail jusque dans l'autre moyen récepteur de charge (18) lorsque l'autre moyen récepteur de charge (18) se trouve en dessous du moyen récepteur de charge (8) au moment de l'éjection ;
**caractérisé en ce que** le moyen récepteur de charge (8) est un véhicule de transport sans conducteur.

8. Système (108, 108', 109) selon la revendication 7,
dans lequel le système (108) est conçu pour effectuer individuellement le déplacement de transport pour le moyen récepteur de charge (8).

9. Système (108, 108', 109) selon la revendication 7 ou 8,
dans lequel la direction d'éjection (a) est exactement opposée à la direction de déplacement momentanée, et/ou la valeur de la composante de vitesse de la vitesse d'éjection (va), vue depuis le moyen récepteur de charge (8), dans le sens opposé à la direction de déplacement correspond à la valeur de la vitesse de déplacement momentanée (v) du moyen récepteur de charge, et/ou le dispositif d'éjection (4) éjecte la marchandise de détail depuis le moyen récepteur de charge avec une vitesse d'éjection (va), vue depuis le moyen récepteur de charge, qui correspond au vecteur opposé de la vitesse momentanée (v) du moyen récepteur de charge (8).

10. Système (108, 108', 109) selon l'une des revendications 7 à 9,
dans lequel le dispositif d'éjection (4) comprend au moins une courroie, une bande, un rouleau, un poussoir ou une goulotte.

11. Système (108, 108', 109) selon l'une des revendications 7 à 10,
dans lequel le moyen récepteur de charge (8) est conçu comme une remorque surbaissée.
